# EUROPEAN PATENT APPLICATION

(11) **EP 3 711 647 A1**
(43) Date of publication of application: **23.09.2020**
(21) Application number: 17931859.7
(22) Date of filing: 16.11.2017
(51) Int. Cl.: A47L 9/28, G05D 1/02

(54) **SELF-PROPELLED VACUUM CLEANER**

(71) Applicant: Chiba Institute of Technology, Narashino-shi, Chiba 275-0016 (JP)
(72) Inventor: FURUTA Takayuki, Narashino-shi Chiba 275-0016 (JP); TOMONO Masahiro, Narashino-shi Chiba 275-0016 (JP); YAMATO Hideaki, Narashino-shi Chiba 275-0016 (JP); YOSHIDA Tomoaki, Narashino-shi Chiba 275-0016 (JP); SHIMIZU Masaharu, Narashino-shi Chiba 275-0016 (JP); OKUMURA Yu, Narashino-shi Chiba 275-0016 (JP); TODA Kengo, Narashino-shi Chiba 275-0016 (JP); KODACHI Takashi, Narashino-shi Chiba 275-0016 (JP); IRIE Kiyoshi, Narashino-shi Chiba 275-0016 (JP); HARA Yoshitaka, Narashino-shi Chiba 275-0016 (JP); OGIHARA Kazuki, Narashino-shi Chiba 275-0016 (JP)
(74) Representative: Zimmermann, Tankred Klaus
(86) International application number: PCT/JP2017/041256
(87) International publication number: WO 2019/097626

(57) **Abstract**

An autonomous vacuum cleaner is provided which allows a user to check the operating state of a vacuum cleaner body and a map to be created, and can increase cleaning efficiency. An autonomous vacuum cleaner (1) includes a vacuum cleaner body (2) and a mobile terminal (6). Whenever the vacuum cleaner body 2 acquires surrounding information and location information while travelling autonomously, a map creator (471) creates a map of a cleaning target space including the vacuum cleaner body (2) in real time, and a map display (61) of the mobile terminal (6) displays the map.

## Description

### TECHNICAL FIELD

The present invention relates to an autonomous vacuum cleaner.

### BACKGROUND ART

As an autonomous vacuum cleaner (vacuum cleaning robot) for cleaning the floor surface of a cleaning target space, an autonomous vacuum cleaner has conventionally been known in which the location, size, and shape of a target object (for example, a wall or furniture) are measured to create a map (map information) of the cleaning target space, and a travel path and a travel schedule are set in accordance with the map to clean the cleaning target space in accordance with the travel path and the travel schedule (refer to, for example, Patent Document 1). The autonomous vacuum cleaner described in Patent Document 1 includes a map information creation means and a map information storage means, and is configured in such a manner as to start creating map information concurrently with the start of a cleaning operation, and update the map information in accordance with the distance travelled during the cleaning operation to cause the map information storage means to store the map information, search for an uncleaned area with reference to the updated latest map information, and execute a cleaning operation on the uncleaned area.

### CITATION LIST

### PATENT LITERATURE

Patent Document 1: JP-A-2005-211367

### SUMMARY OF THE INVENTION

### PROBLEMS TO BE SOLVED BY THE INVENTION

However, in such a known autonomous vacuum cleaner as described in Patent Document 1, a map of a cleaning target space is created, and the map is updated during a cleaning operation to execute a cleaning operation on an uncleaned area on the basis of the updated map. However, a user cannot determine how the map has been created or updated. Hence, if, in the cleaning target space, the position of furniture is changed, or everyday items, clothes, and the like are temporarily placed, a user cannot check whether or not the map has appropriately been created or updated. Accordingly, a situation that results in creating an inappropriate map cannot be avoided. As a result, cleaning efficiency may be reduced.

An object of the present invention is to provide an autonomous vacuum cleaner that allows a user to check the operating state of a vacuum cleaner body and a map to be created and can increase cleaning efficiency.

### SOLUTIONS TO THE PROBLEMS

An autonomous vacuum cleaner of the present invention includes: a vacuum cleaner body configured to be capable of cleaning a floor surface while travelling autonomously along the floor surface; and an information processing apparatus configured to process information transmitted from the vacuum cleaner body, in which the vacuum cleaner body has: a surrounding information acquisition means configured to acquire surrounding information related to a target object in a cleaning target space; and a location information acquisition means configured to acquire location information of the vacuum cleaner body in the cleaning target space, at least one of the vacuum cleaner body and the information processing apparatus has a map creator configured to create a map of the cleaning target space on the basis of the surrounding information and the location information, the information processing apparatus has a map display configured to display the map, and whenever the vacuum cleaner body acquires the surrounding information and the location information while travelling autonomously, the map creator creates the map of the cleaning target space including the vacuum cleaner body in real time, and the map display of the information processing apparatus displays the map.

According to such a present invention, the autonomous vacuum cleaner allows the map creator to create the map of the cleaning target space including the vacuum cleaner body in real time on the basis of the surrounding information and the location information, which are acquired as the vacuum cleaner body travels autonomously, and allows the map display of the information processing apparatus to display the created map. Accordingly, the user can grasp the state of the vacuum cleaner body in the cleaning target space in real time. Therefore, the user can check, for example, a change in an environment of the cleaning target space, the operating state of the vacuum cleaner body, and whether or not the map of the cleaning target space is appropriately created so that if an abnormality occurs in them, it is possible for the user to handle the abnormality. Accordingly, cleaning efficiency can be increased. Here, a space partitioned by walls and the like into an appropriate size, such as a living room (living room), a dining room (dining room), a bedroom, or a corridor can be exemplified as the cleaning target space. In such a cleaning target space, installed objects such as furniture, electric appliances, equipment, and carpets are generally installed. An appropriate map is created in accordance with the installation state of such installed objects to allow increasing cleaning efficiency.

In the present invention, preferably, the map creator has: a correction determiner configured to determine whether or not to correct the map on the basis of the previously created map and newly acquired surrounding information and location information; and a correction executor configured to, upon the correction determiner having determined to correct the map, correct the previously created map on the basis of the newly acquired surrounding information and location information.

According to such a configuration, the map creator has the correction determiner and the correction executor. If the correction determiner has determined that a correction is required, the correction executor corrects the map on the basis of the newly acquired surrounding information and location information. Accordingly, the accuracy of the map to be created in real time can be increased.

In the present invention, preferably, at least one of the vacuum cleaner body and the information processing apparatus has a path information creator configured to create path information related to a travel path of the vacuum cleaner body on the basis of the newly acquired surrounding information and location information, the information processing apparatus has a path information display configured to display the path information, superimposing the path information on the map, and upon the correction executor having corrected the map, the path information creator corrects the path information in accordance with the corrected map.

According to such a configuration, the autonomous vacuum cleaner allows the path information creator to create the path information related to the travel path of the vacuum cleaner body on the basis of the newly acquired surrounding information and location information, and allows the path information display of the information processing apparatus to display the created path information, superimposing the path information on the map. Accordingly, the user can check the travel path of the vacuum cleaner body in the cleaning target space. Furthermore, if the correction executor has corrected the map, the path information creator corrects the path information in accordance with the corrected map. Accordingly, consistency between the corrected map and the path information can be provided.

In the present invention, preferably, at least one of the vacuum cleaner body and the information processing apparatus has a cleaning information creator configured to create cleaning information related to a cleaning result of the vacuum cleaner body, on the basis of the path information created by the path information creator, the information processing apparatus has a cleaning information display configured to display the cleaning information, superimposing the cleaning information on the map, and upon the correction executor having corrected the map, the cleaning information creator corrects the cleaning information in accordance with the corrected map.

According to such a configuration, the autonomous vacuum cleaner allows the cleaning information creator to create the cleaning information related to the cleaning result of the vacuum cleaner body on the basis of the path information, and allows the cleaning information display of the information processing apparatus to display the created cleaning information, superimposing the cleaning information on the map. Accordingly, the user can check the cleaning result of the vacuum cleaner body in the cleaning target space. Here, the cleaning information includes cleaning area information related to an area that has been cleaned by the vacuum cleaner body, debris information indicating the amount of debris sucked up, and stuck information indicating that the vacuum cleaner body has got stuck while travelling. Furthermore, if the correction executor has corrected the map, the cleaning information creator corrects the cleaning information in accordance with the corrected map. Accordingly, consistency between the corrected map and the cleaning information can be provided, and the user can grasp the cleaned place correctly.

In the present invention, preferably, the cleaning information creator creates cleaning area information related to an area that has been cleaned by the vacuum cleaner body, on the basis of execution information related to an execution state of cleaning by the vacuum cleaner body, and the path information created by the path information creator, and the cleaning information display displays the cleaning area information, superimposing the cleaning area information on the map.

According to such a configuration, the cleaning information creator creates the cleaning area information on the basis of the cleaning execution information and the path information. The cleaning information display displays the cleaning area information, superimposing the cleaning area information on the map. Accordingly, the user can, in real time, check the execution state of cleaning by the vacuum cleaner body and the cleaned area. Here, the execution information includes, for example, turning on/off of the vacuum operation, a change in suction power, and the number of repetitions of cleaning in the same place as the execution state of cleaning by the vacuum cleaner body.

In the present invention, preferably, the information processing apparatus has: a destination setter configured to accept an operation input of a user and set a destination in the map; and a transmission command configured to transmit a movement command for moving toward the destination, to the vacuum cleaner body, and the vacuum cleaner body moves toward a destination in the cleaning target space corresponding to the destination in the map, on the basis of the movement command received from the information processing apparatus.

According to such a configuration, the information processing apparatus has the destination setter and the transmission command, and transmits the destination inputted by the user to the vacuum cleaner body. The vacuum cleaner body moves toward the destination in the cleaning target space on the basis of the received movement command. Accordingly, the vacuum cleaner body can be moved to and clean any place in the cleaning target space at the request of the user. Therefore, for example, even if cleaning cannot be performed around an obstacle in the cleaning target space, the user removes the obstacle first and then the vacuum cleaner body is moved with a place of the obstacle as a destination. Accordingly, the place where the obstacle was can be cleaned, and a map after the obstacle was removed can be created.

In the present invention, preferably, the information processing apparatus has an indicator generator configured to add an indicator indicating an operating state of the vacuum cleaner body, superimposing the indicator on an image of the vacuum cleaner body displayed on the map.

According to such a configuration, the information processing apparatus has the indicator generator. The indicator generator displays the indicator indicating the action state of the vacuum cleaner body, superimposing the indicator on the image of the vacuum cleaner body in the map. Accordingly, the user can check the operating state of the actual vacuum cleaner body easily by viewing the image of the vacuum cleaner body in the map.

In the present invention, preferably, the vacuum cleaner body has a body indicator indicating the operating state of the vacuum cleaner body, and the body indicator and the indicator superimposed on the image of the vacuum cleaner body displayed on the map present a common operating state.

According to such a configuration, the body indicator on the vacuum cleaner body and the indicator superimposed on the image of the vacuum cleaner body displayed on the map present the common operating state. Accordingly, the user can check the operating state of the vacuum cleaner body easily by viewing any of the body indicator and the image of the vacuum cleaner body in the map displayed on the information processing apparatus. Moreover, the indicator displayed superimposed on the image of the vacuum cleaner body in the map presents the common operating state as an image imitating the body indicator. Accordingly, the user can grasp the operating state intuitionally compared with a case where the indicator is displayed as character information.

### BRIEF DESCRIPTION OF THE DRAWINGS

Fig. 1 is a perspective view of an autonomous vacuum cleaner according to one embodiment of the present invention as viewed from above.
Fig. 2 is a perspective view of the autonomous vacuum cleaner as viewed from below.
Fig. 3 is a perspective view of a protruding state of a surrounding cleaning means in the autonomous vacuum cleaner as viewed from above.
Fig. 4 is a perspective view of the protruding state of the surrounding cleaning means in the autonomous vacuum cleaner as viewed from below.
Fig. 5 is a front view illustrating the protruding state of the surrounding cleaning means in the autonomous vacuum cleaner.
Fig. 6 is a right-side view illustrating the protruding state of the surrounding cleaning means in the autonomous vacuum cleaner.
Fig. 7 is a back view illustrating the protruding state of the surrounding cleaning means in the autonomous vacuum cleaner.
Fig. 8 is a functional block diagram illustrating a schematic configuration of the autonomous vacuum cleaner.
Figs. 9(A) and 9(B) are block diagrams illustrating a part of a control means of the autonomous vacuum cleaner.
Fig. 10 is a flowchart illustrating the operation of a vacuum cleaner body in the autonomous vacuum cleaner.
Figs. 11(A) to 11(D) are diagrams explaining a state where the autonomous vacuum cleaner creates a map.
Fig. 12 is a diagram illustrating a display image of an information processing apparatus in the autonomous vacuum cleaner.
Fig. 13 is a diagram illustrating another display image of the information processing apparatus.
Figs. 14(A) and 14(B) are diagrams illustrating still other display images of the information processing apparatus.

### DESCRIPTION OF THE EMBODIMENTS

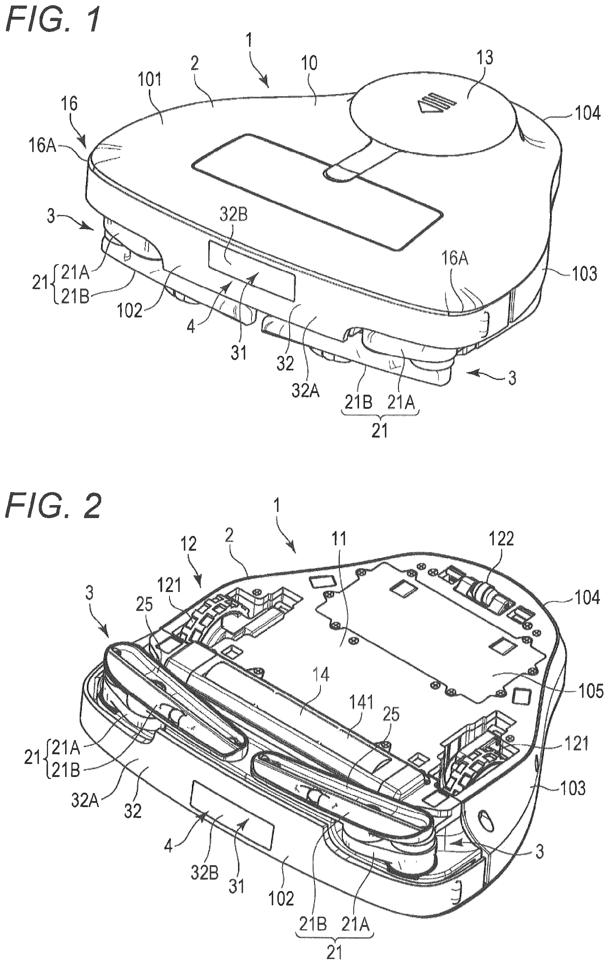

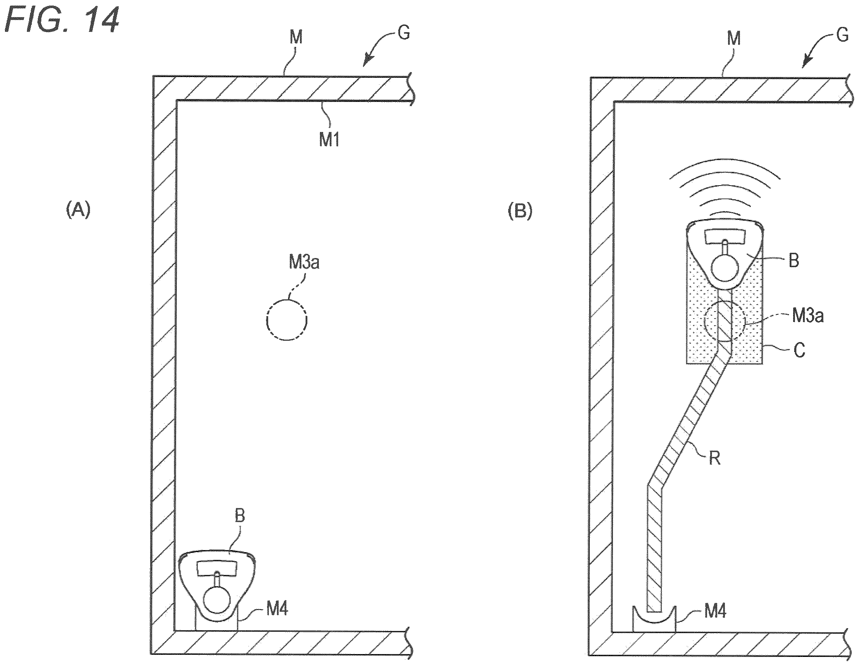

One embodiment of the present invention is described hereinafter on the basis of Figs. 1 to 14(A) and 14(B).

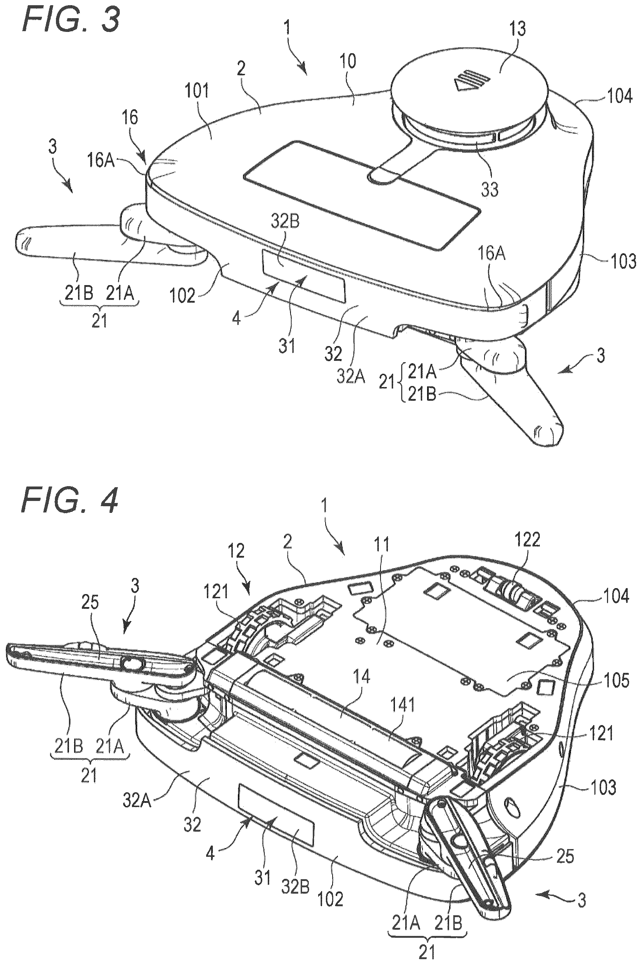

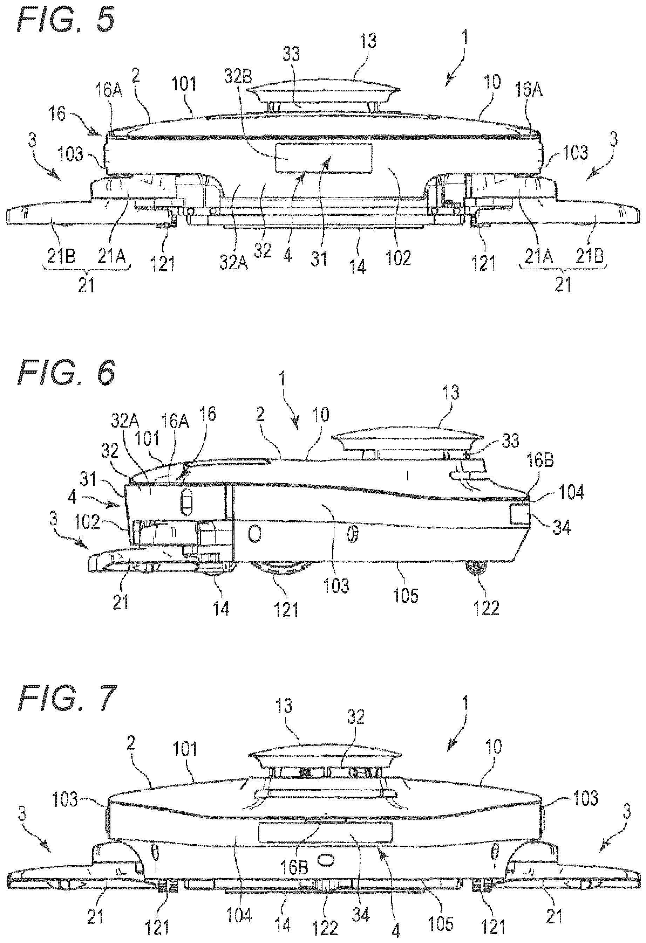

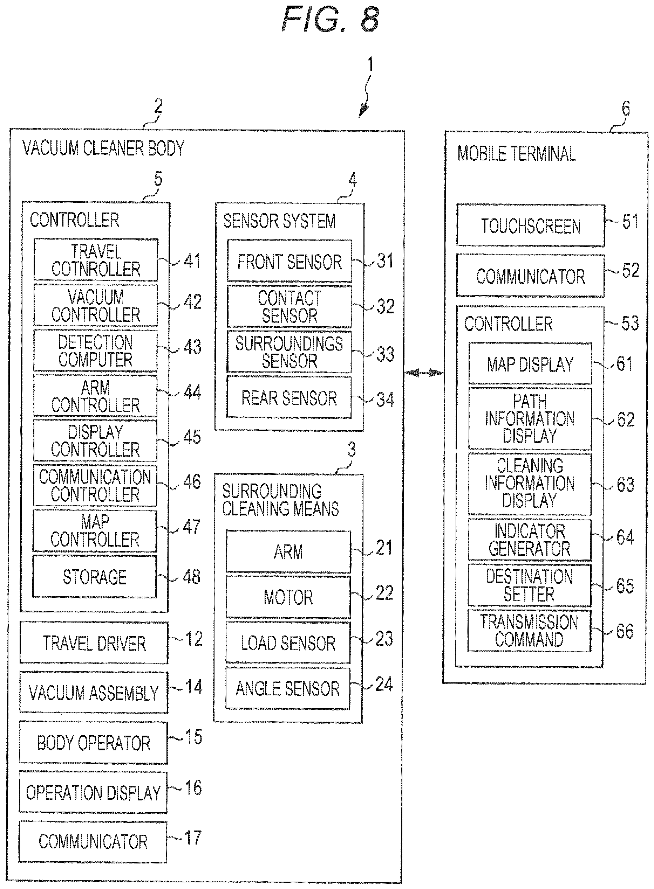

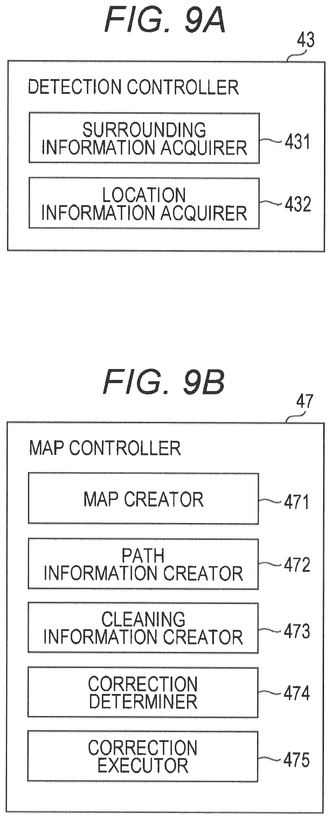

Fig. 1 is a perspective view of an autonomous vacuum cleaner according to one embodiment of the present invention as viewed from above. Fig. 2 is a perspective view of the autonomous vacuum cleaner as viewed from below. Fig. 3 is a perspective view of a protruding state of a surrounding cleaning means in the autonomous vacuum cleaner as viewed from above. Fig. 4 is a perspective view of the protruding state of the surrounding cleaning means in the autonomous vacuum cleaner as viewed from below. Figs. 5 to 7 are a front view, a right-side view, and a back view, which illustrate the protruding state of the surrounding cleaning means in the autonomous vacuum cleaner. Fig. 8 is a functional block diagram illustrating a schematic configuration of the autonomous vacuum cleaner. Figs. 9(A) and 9(B) are block diagrams illustrating a part of a control means of the autonomous vacuum cleaner.

As illustrated in Fig. 8, an autonomous vacuum cleaner 1 includes a vacuum cleaner body 2 being a vacuum cleaning robot that cleans the floor surface while travelling along the floor surface, and a mobile terminal 6 as an information processing apparatus that processes information transmitted from the vacuum cleaner body 2. As illustrated in Figs. 1 to 8, the vacuum cleaner body 2 includes a surrounding cleaning means 3 for cleaning around the vacuum cleaner body 2, a sensor system 4 including various sensors for detecting a target object around the vacuum cleaner body 2, and a controller 5 (refer to Fig. 8) as a control means that controls the drive of the vacuum cleaner body 2, the surrounding cleaning means 3, and the sensor system 4. The vacuum cleaner body 2 cleans while travelling autonomously, on the basis of a map and a travel schedule for each cleaning target space stored in the controller 5.

As illustrated in Figs. 1 to 7, the vacuum cleaner body 2 includes a body 10 and a chassis 11, The body 10 configures a top surface 101, left and right side surfaces 103, and a rear surface 104 of the autonomous vacuum cleaner 1. The chassis 11 configures an undersurface 105. The sensor system 4 includes a contact sensor 32 having a bumper 32A. A front surface of the bumper 32A configures a front surface 102 of the vacuum cleaner body 2.

Furthermore, as also illustrated in Fig. 8, the vacuum cleaner body 2 includes a travel driver 12 having a pair of left and right wheels 121 for travelling autonomously, a lift 13 that is provided, configured to be capable of lifting up from the top surface 101 of the body 10, a vacuum assembly 14 that is provided on the undersurface 105 of the body 10 to suck up dust and dirt on the floor surface, a body operator 15 for operating the vacuum cleaner body 2, an operation display 16 being a body indicator indicating the operating state of the vacuum cleaner body 2, and a communicator 17 for communicating with the mobile terminal 6. The body operator 15 is, for example, a touch sensor switch (not illustrated) provided on the top surface 101 of the vacuum cleaner body 2, and operates the vacuum cleaner body 2 with a touch operation by a user and stops the vacuum cleaner body 2 with a touch operation during operation.

The surrounding cleaning means 3 are provided in a pair on left and right sides of a front part of the vacuum cleaner body 2. The surrounding cleaning means 3 includes a pivotable arm 21 that protrudes sideway from the vacuum cleaner body 2, a motor 22 that drives the arm 21 to pivot, a load sensor 23 that detects load acting on the motor 22 from the outside, and an angle sensor 24 that detects the pivot angle of the arm 21. The arm 21 of the surrounding cleaning means 3 is configured including a first arm 21A that is rotatably supported on one end side thereof by the vacuum cleaner body 2, and a second arm 21B that is rotatably supported on the other end side of the first arm 21A. The first arm 21A as a whole is formed into a hollow shape. One end side of the first arm 21A is rotatably supported by the chassis 11. The second arm 21B as a whole is formed into an extra-long cup shape that opens downward. A middle portion of the second arm 21B is rotatably supported on the other end side of the first arm 21A. The second arm 21B includes a sub-vacuum inlet 25 that opens downward to suck up dirt and the like on the floor surface. The sub-vacuum inlet 25 communicates with a duct and a dust collection chamber of the vacuum assembly 14 through internal spaces of the second arm 21B and the first arm 21A.

The sensor system 4 is configured including a front sensor 31 and the contact sensor 32, which are provided to the front part of the vacuum cleaner body 2, a surroundings sensor 33 provided in the lift 13, and a rear sensor 34 provided on the rear surface 104 of the body 10.

The front sensor 31 is a 3D sensor such as a depth camera or a 3D-LIDAR, and includes a light emitter (not illustrated) that emits light such as infrared light or laser light to the front, and a light receiver (not illustrated) that receives reflected light being the emitted light reflected and returned from a target object. The front sensor 31 is covered with an acrylic board 32B of the bumper 32A. The light receiver includes an image sensor such as a CMOS or CCD where a plurality of light receiving devices is placed in a lattice form (matrix form). The light receiver receives the reflected light with the plurality of light receiving devices (measuring points) on a two-dimensional plane along a vertical plane orthogonal to a front-and-rear direction of the vacuum cleaner body 2. Therefore, the front sensor 31 detects a distance to the target object for each light receiving device on the basis of a time from when light is emitted from the light emitter to when each light receiving device of the light receiver receives the reflected light reflected from the target object, and accordingly detects the target object present ahead of the vacuum cleaner body 2 three-dimensionally.

The contact sensor 32 includes the bumper 32A that is supported at the front of the vacuum cleaner body 2 in such a manner as to be movable in a front-and-rear direction and a left-and-right direction with respect to the body 10. A supporter (not illustrated) that supports the bumper 32A in such a manner as to be movable in the front-and-rear direction and the left-and-right direction with respect to the body 10, a sensor member (not illustrated) that detects that the bumper 32A has moved to the rear and to the left and right with respect to the body 10, and a biasing member (not illustrated) that biases the bumper 32A to an initial position are provided inside the bumper 32A. The sensor member detects that the bumper 32A has moved to the rear or to the left or right. Accordingly, such a contact sensor 32 detects that the vacuum cleaner body 2 has collided with an obstacle.

The surroundings sensor 33 is a laser scanner (LIDAR (Light Detection and Ranging or Laser Imaging Detection and Ranging)) that is driven and rotated inside the lift 13 and measures distance by applying laser light such as infrared laser light, and calculates a distance to an obstacle and the shape of the obstacle. The surroundings sensor 33 is not limited to the one provided in the lift 13 and is simply required to be provided at any position in the body 10. The rear sensor 34 is for detecting its distance and position with respect to, for example, an unillustrated charging station, and communicates with infrared light or the like with the charging station or the like.

The travel driver 12 includes the pair of left and right wheels 121, and a motor (not illustrated) that drives and rotates the pair of wheels 121 independently. Moreover, an auxiliary wheel 122 is provided to a rear part of the chassis 11. The vacuum assembly 14 is connected to a roller brush 141, and the duct, a suction fan, the dust collection chamber, and an exhaust port, which are not illustrated. The vacuum assembly 14 is configured in such a manner as to collect the sucked dust and the like through a filter of the dust collection chamber and exhaust the sucked air from the exhaust port. The duct or dust collection chamber of the vacuum assembly 14 is connected to a sub-duct as a dust collection path communicating with the arm 21 of the surrounding cleaning means 3.

The operation display 16 includes a pair of left and right blinkers 16A provided straddling the front surface 102 and the left and right side surfaces 103 near the top surface 101 of the body 10, and a backup lamp 16B provided to the rear surface 104. A light emitting means such as an LED is embedded in the blinker 16A, The blinker 16A is for indicating a turning operation by causing the right or left blinker 16A to blink when the vacuum cleaner body 2 turns right or left while travelling autonomously. A light emitting means such as an LED is embedded in the backup lamp 16B. The backup lamp 16B is for indicating a backup operation by blinking when the vacuum cleaner body 2 moves back. The operation display 16 is not limited to the blinkers 16A and the backup lamp 16B, and may include a plurality of light emitting means such as LEDs placed around the body 10. The operation display 16 may be configured to be capable of displaying any travel direction such as forward, backward, left, right, and oblique directions by causing the light emitting means at a position corresponding to the travel direction of the vacuum cleaner body 2 to illuminate or blink. Furthermore, the operation display 16 may be configured including various body indicators indicating various operating states of the vacuum cleaner body 2, other than those indicating the travel direction of the vacuum cleaner body 2 such as the blinkers 16A and the backup lamp 16B.

The communicator 17 is for communicating bidirectionally between the vacuum cleaner body 2 and the mobile terminal 6 by various wireless communication systems such as Wi-Fi (Wireless Fidelity, registered trademark), Bluetooth (registered trademark), and infrared communication. The communicator 17 includes an unillustrated antenna and infrared light emitter. The communicator 17 may be for communicating directly with the mobile terminal 6 with radio waves of a predetermined frequency or infrared light, or for communicating with the mobile terminal 6 via a network line such as a local area network (LAN) or a wide area network (WAN), or a wireless or wired telephone line network used for a mobile phone.

The controller 5 includes a travel controller 41 that controls the travel driver 12, a vacuum controller 42 that controls the vacuum assembly 14, a detection controller 43 that processes detection signals from the front sensor 31, the contact sensor 32, the surroundings sensor 33, and the rear sensor 34 of the sensor system 4, and the load sensor 23 and the angle sensor 24 of the surrounding cleaning means 3, and an arm controller 44 that controls and drives the motor 22 of the surrounding cleaning means 3 and causes the arm 21 to pivot. The controller 5 is configured further including a display controller 45 that controls the operation display 16 to cause the blinkers 16A and the backup lamp 16B to blink, a communication controller 46 that controls the communicator 17 to communicate with the mobile terminal 6, a map controller 47 for creating and correcting a map, a travel path, and a travel schedule of a cleaning target space, and a storage (memory) 48 that stores various pieces of information such as the map, the path information, the travel schedule.

As illustrated in Fig. 9(A), the detection controller 43 includes a surrounding information acquirer (surrounding information acquisition means) 431 that acquires surrounding information related to a target object in a cleaning target space on the basis of a detection signal from the sensor system 4, and a location information acquirer (location information acquisition means) 432 that acquires location information of the vacuum cleaner body 2 in the cleaning target space. The location information acquirer 432 acquires location information using a technology for estimating its own location (for example, the SLAM (Simultaneous Localization and Mapping) technology) on the basis of, for example, the drive amount of the travel driver 12 or surrounding information. Here, the target objects include fixed objects such as the walls, floor surface, and door, which form a cleaning target space such as a living room or a corridor, installed objects such as furniture, electric appliances, and carpets, which are installed in the cleaning target space, and non-fixed objects such as everyday items, clothes, footwear, toys, and the like, which are placed of the floor surface of the cleaning target space. The fixed object does not move and therefor serves as a reference that provides a map and travel path of the cleaning target space. The installed object does not usually move but its position may be changed due to new installation, disposal, alterations to the room, or the like. Accordingly, the installed object may become an obstacle during a cleaning mission. The non-fixed object is unsteady in terms of the presence or absence of an existence thereof, and has a large possibility to become an obstacle during a cleaning mission.

In this manner, the surrounding information acquired by the surrounding information acquirer 431 relates to target objects such as fixed objects, installed objects, and non-fixed objects, and includes planar location information in the cleaning target space, and three-dimensional shape information of the target objects. A map of the cleaning target space is created on the basis of the surrounding information and a travel schedule based on the map of the cleaning target space is created. They are stored in the storage 48. The travel schedule is a map-based cleaning mode where set values related to place and time are defined, for example, cleaning using both or one of the vacuum assembly 14 and the surrounding cleaning means 3, repeatedly cleaning the same spot, changing suction powers of the vacuum assembly 14 and the surrounding cleaning means 3, and changing the travel speed of the travel driver 12.

As illustrated in Fig. 9(B), the map controller 47 includes a map creator 471 that creates a map of a cleaning target space on the basis of the surrounding information and the location information, which have been acquired by the detection controller 43, a path information creator 472 that creates path information related to the travel path of the vacuum cleaner body 2 on the basis of the surrounding information and the location information, and a cleaning information creator 473 that creates cleaning information related to a cleaning result of the vacuum cleaner body 2 on the basis of the path information created by the path information creator 472. The map controller 47 further includes a correction determiner 474 that determines whether or not to correct the map on the basis of the previously created map and newly acquired surrounding information and location information, and a correction executor 475 that, if the correction determiner 474 has determined to correct the map, corrects the previously created map, path information, and cleaning information on the basis of the newly acquired surrounding information and location information.

The timings when the map creator 471 creates a map includes, for example, a case of a map generation mode of newly generating a map of a new cleaning target space, a case of a map updating mode of updating a map for a known cleaning target space for which a map has already been generated, a case of an autonomous cleaning mode of performing normal autonomous cleaning on a known cleaning target space, and a case of a space determination mode of determining an appropriate space among a plurality of known cleaning target spaces. In the map generation mode, the map updating mode, and the space determination mode, the vacuum assembly 14 and the surrounding cleaning means 3 may be driven to clean, or may not be driven.

The mobile terminal 6 is a mobile communication apparatus that is mobile and has a communication function, such as a mobile phone, smartphone, tablet terminal, notebook personal computer, PDA, or smartwatch. As illustrated in Fig. 8, the mobile terminal 6 is configured including a touchscreen 51 being a display, a communicator 52, and a controller 53. The touchscreen 51 is a liquid crystal display that can accept an operation input from a user. The communicator 52 is an interface that can communicate in a wireless communication system similar to the communicator 17 of the vacuum cleaner body 2. The vacuum cleaner body 2 and the mobile terminal 6 can communicate bidirectionally via their respective communicators 17 and 52. It is configured in such a manner that the mobile terminal 6 can receive various pieces of information such as the map created by the map creator 471 of the vacuum cleaner body 2, the path information created by the path information creator 472, and the cleaning information and cleaning area information created by the cleaning information creator 473, and the vacuum cleaner body 2 can receive operation commands of the mobile terminal 6.

The controller 53 includes an unillustrated computing circuity such as a CPU, and storages such as ROM and RAM, and controls the operation of the mobile terminal 6. The controller 53 is configured in such a manner as to be capable of executing application software that coordinates with the vacuum cleaner body 2. The controller 53 includes a map display 61 that causes the touchscreen 51 to display a map received from the vacuum cleaner body 2, a path information display 62 that causes the touchscreen 51 to display path information, superimposing the path information on the map, and a cleaning information display 63 that causes the touchscreen 51 to display cleaning information, superimposing the cleaning information on the map. The controller 53 further includes an indicator generator 64 that causes the touchscreen 51 to display an image of the vacuum cleaner body, superimposing the image on the map, and adds an indicator indicating the operating state of the vacuum cleaner body 2 to the image, a destination setter 65 that sets a destination in the map by accepting an operation input from a user into the touchscreen 51, and a transmission command 66 that transmits, to the vacuum cleaner body 2, a movement command for moving toward the destination.

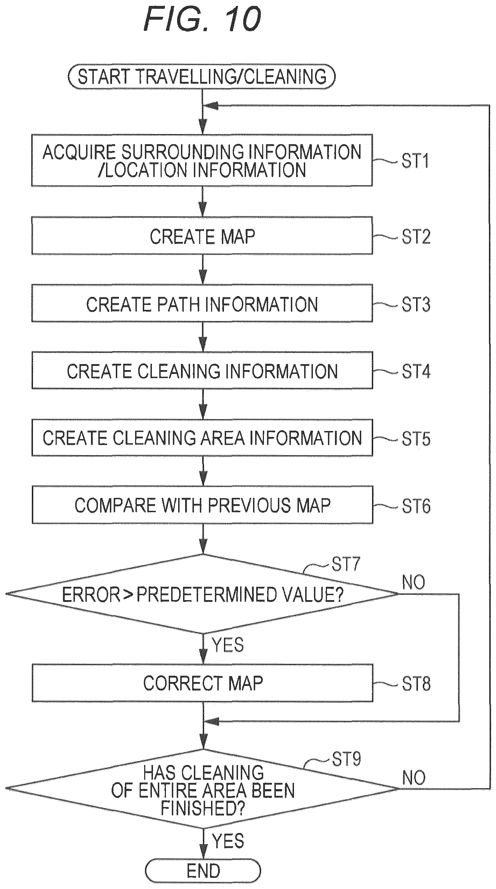

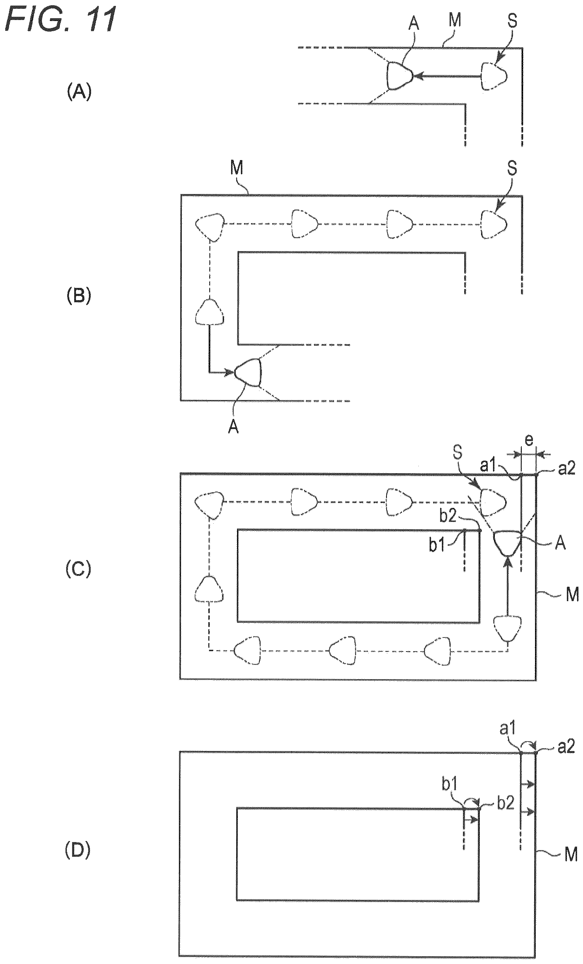

The operation of the vacuum cleaner body 2 in autonomous cleaning mode is described below with reference to Figs. 10 and 11(A) to 11(D). Fig. 10 is a flowchart illustrating the operation of the vacuum cleaner body in the autonomous vacuum cleaner. Figs. 11(A) to 11(D) are diagrams explaining the states where the autonomous vacuum cleaner creates a map.

When starting cleaning the floor surface with the vacuum assembly 14 and the surrounding cleaning means 3 while traveling autonomously with the travel driver 12, the vacuum cleaner body 2 acquires surrounding information and location information as illustrated in Fig. 10 (a surrounding information/location information acquisition step: step ST1). In the surrounding information/location information acquisition step (step ST1), the front sensor 31 and the surroundings sensor 33 detect distances to surrounding target objects three-dimensionally. The surrounding information acquirer 431 causes the storage 48 to sequentially store the distances to the target objects. Surrounding information related to target objects such as fixed objects, installed objects, and non-fixed objects in a cleaning target space is generated. Moreover, if the front sensor 31 does not detect the nearest target object, for example, at the start of travel, or if a sudden change occurs in environment, for example, if a non-fixed object is placed ahead of the vacuum cleaner body 2, when the contact sensor 32 comes into contact with the target object, the surrounding information acquirer 431 recognizes the presence of the target object at a location thereof, and causes the storage 48 to store the location to generate surrounding information. Furthermore, in the surrounding information/location information acquisition step, the location of the vacuum cleaner body 2 in the cleaning target space is detected on the basis of the amount of drive of the travel driver 12, and the location information acquirer 432 generates location information.

Next, the map creator 471 of the map controller 47 creates a map of the cleaning target space on the basis of the surrounding information and the location information (a map creation step: step ST2), Specifically, the vacuum cleaner body 2 repeats the detection and storage of target objects with the front sensor 31, the contact sensor 32, and the surroundings sensor 33 while travelling autonomously with the travel driver 12 on the basis of the surrounding information and the location information. Accordingly, the map creator 471 identifies relative positions, shapes, and the like of fixed objects, installed objects, non-fixed objects, and the like in the cleaning target space, constructs their relative positions and shapes as planar or three-dimensional map information, and causes the storage 48 to store the constructed map information as a map. The cleaning target space map generated in this manner includes shapes of target objects such as a floor surface, wall surfaces rising from the floor surface, surfaces of furniture and the like rising continuously from the floor surface, level differences on the floor surface, projections protruding from the floor surface and the wall surfaces, and side surfaces and undersurfaces of furniture and the like, which are away up from the floor surface. The controller 5 generates a travel schedule for thoroughly and efficiently cleaning the entire cleaning target space in accordance with the map, and causes the storage 48 to store the travel schedule.

In the map creation step (step ST2), as illustrated in Figs. 11(A) and 11(B), the map creator 471 creates a map M sequentially in real time with the travel of the vacuum cleaner body 2. Figs. 11(A) to 11(D) conceptually illustrate computation processes by the controller 5. The vacuum cleaner body 2 itself is recognized as a virtual vacuum cleaner body A. When the travel starts at an initial position S, the map creator 471 creates a partial map M of the surroundings of the vacuum cleaner body A in real time, as indicated by a solid line in Fig. 11(A), in accordance with the distance to the surrounding target object detected by the front sensor 31 and the surroundings sensor 33 and the shape of the target object (the surrounding information and the location information). Furthermore, as described below, the map creation step (step ST2) is repeated. Accordingly, as illustrated in Fig. 11(B), the map creator 471 expands the creation target area while the travel is continued, links the continuous target object, draws the shape of the target object, expands the map M sequentially, and creates the map M.

Next, the path information creator 472 of the map controller 47 creates path information related to a travel path of the vacuum cleaner body 2 on the basis of newly acquired surrounding information and location information (a path information creation step: step ST3). Specifically, the path information creator 472 performs computations for consecutively making the location information obtained on the basis of the amount of drive of the travel driver 12 continuous, and accordingly creates path information representing what path the vacuum cleaner body 2 has travelled in the cleaning target space, and causes the storage 48 to store the path information.

Next, the cleaning information creator 473 of the map controller 47 creates cleaning information related to a cleaning result of the vacuum cleaner body 2 on the basis of the path information created by the path information creator 472 (a cleaning information creation step: step ST4). Specifically, the cleaning information creator 473 associates the drive state of the vacuum cleaner body 2 with each location in the travel path in the path information, creates cleaning information representing where in the travel path the cleaning has been performed, and causes the storage 48 to store the cleaning information. Here, the cleaning information includes cleaning area information related to an area that has been cleaned by the vacuum cleaner body 2, debris information indicating the amount of debris sucked up, and stuck information indicating that the vacuum cleaner body 2 has got stuck while travelling.

Furthermore, the cleaning information creator 473 creates cleaning area information related to an area that that has been cleaned by the vacuum cleaner body 2, on the basis of execution information related to the execution state of cleaning by the vacuum cleaner body 2, and the path information (a cleaning area information creation step: step ST5). Specifically, the cleaning information creator 473 associates the drive states of the vacuum assembly 14 and the surrounding cleaning means 3 of the vacuum cleaner body 2 with each location in the travel path in the path information, creates cleaning area information representing how cleaning has been performed in the travel path, and causes the storage 48 to store the cleaning area information. Here, the execution information of cleaning by the vacuum cleaner body 2 includes, for example, the turning on/off of the vacuum operation, a change in suction power, and the number of repetitions of cleaning in the same place, as the execution state of cleaning by the vacuum assembly 14 and the surrounding cleaning means 3.

Next, the correction determiner 474 of the map creator 471 determines whether or not to correct the map M on the basis of the previously created map and the newly acquired surrounding information and location information (a map comparison step: step ST6). Specifically, the correction determiner 474 calculates a planar or three-dimensional relative distance as a positional error in the newly acquired surrounding information and location information with reference to the previously created map M. Furthermore, the correction determiner 474 determines whether or not the calculated error is greater than a predetermined permissible value (threshold) (an error determination step: step ST7). If the error is greater than the predetermined permissible value in the error determination step (step ST7) (YES in step ST7), the correction executor 475 corrects the map M (a map correction step: step ST8). If the error does not exceed the predetermined permissible value (NO in step ST7), the map correction step (step ST8) is skipped.

In the map correction step (step ST8), the correction executor 475 corrects the previously created map M on the basis of the newly acquired surrounding information and location information. Specifically, if a target object that was present in the previous map M could not be detected, if a target object that was not present in the previous map M has been detected, or if a target object has been moved, the surrounding information acquired by the surrounding information acquirer 431 is different from the previous map M. Moreover, also if the wheel 121 of the travel driver 12 spins, or if the wheel 121 rides over or is caught by an obstacle, an error occurs in the location information acquired by the location information acquirer 432, and the surrounding information is different from the previous map M. Whenever the surrounding information and the location information is different from the previous map M in this manner, the correction executor 475 constructs the relative position and shape of a target object in a place different from the previous map M as map information, and writes the constructed map information as a new map M over the previous map M, and causes the storage 48 to store the new map M. Furthermore, the correction executor 475 also makes similar corrections to the path information created in the path information creation step (step ST3), the cleaning information created in the cleaning information creation step (step ST4), and the cleaning area information created in the cleaning area information creation step (step ST5), and causes the storage 48 to store the information.

In the map comparison step (step ST6) to the map correction step (step ST8), which are described above, the computation processes by the controller, which are illustrated in Figs. 11(C) and 11(D), are executed. In other words, as illustrated in Fig. 11(C), when the vacuum cleaner body A returns to the vicinity of the initial position S, if a target object around the initial position S is detected and surrounding information and location information is newly acquired, the location of the target object may be detected, displaced from the map M created previously (at the initial position S). Specifically, feature points a1 and b1 in the previously created map M may not agree with feature points a2 and b2 based on the newly acquired surrounding information and location information. In the map comparison step (step ST6), the correction determiner 474 calculates the amount of displacement between the feature points a1 and b1 and the feature points a2 and b2, as an error e. In the error determination step (step ST7), the correction determiner 474 compares the error e with the permissible value. If the error e is greater than the permissible value, the correction executor 475 corrects the map M taking the feature points a2 and b2 based on the newly acquired surrounding information and location information as right locations, as illustrated in Fig. 11(D), in the map correction step (step ST8).

If the map M is corrected in this manner, the correction executor 475 also corrects the path information, the cleaning information, and the cleaning area information. In other words, before the correction, the path information, the cleaning information, and the cleaning area information is created on the basis of locations (coordinates) corresponding to the previously created map M, and is stored sequentially in the storage 48. Hence, similar corrections to those to the map M are made. Accordingly, the locations (coordinate) of the path information, the cleaning information, and the cleaning area information change to those adapted to the corrected map M.

Next, as illustrated in Fig. 10, the controller 5 determines whether or not cleaning for the entire area of the cleaning target space has been finished, that is, whether or not the travel schedule for the cleaning target space has been finished (a cleaning end determination step: step ST9). If it has been determined in the cleaning end determination step (step ST9) that the cleaning had not been finished yet (NO in step ST9), the controller 5 continues driving the travel driver 12, the vacuum assembly 14, and the surrounding cleaning means 3, and repeatedly executes the surrounding information/location information acquisition step (step ST1) to the cleaning end determination step (step ST9). On the other hand, if it has determined in the cleaning end determination step (step ST9) that the cleaning had been finished (YES in step ST9), the controller 5 stops driving the travel driver 12, the vacuum assembly 14, and the surrounding cleaning means 3, and ends the autonomous cleaning mode.

As described above, whenever the surrounding information acquirer 431 and the location information acquirer 432 acquire surrounding information and location information in the surrounding information/location information acquisition step (step ST1) during the operation of the vacuum cleaner body 2 in autonomous cleaning mode, the controller 5 allows the map creator 471 to create a map of a cleaning target space in real time in the map creation step (step ST2). Moreover, the controller 5 allows the path information creator 472 to create path information in the path information creation step (step ST3), allows the cleaning information creator 473 to create cleaning information in the cleaning information creation step (step ST4), and allows the cleaning information creator 473 to create cleaning area information in the cleaning area information creation step (step ST5). Furthermore, if the correction determiner 474 has determined to correct the map in the map comparison step (step ST6) and the error determination step (step ST7), the controller 5 allows the correction executor 475 to correct the previously created map in the map correction step (step ST8). The map, the path information, the cleaning information, and the cleaning area information, which are created and corrected in this manner, are consecutively stored in the storage 48, and transmitted to the mobile terminal 6 via the communicator 17 at the request of the mobile terminal 6.

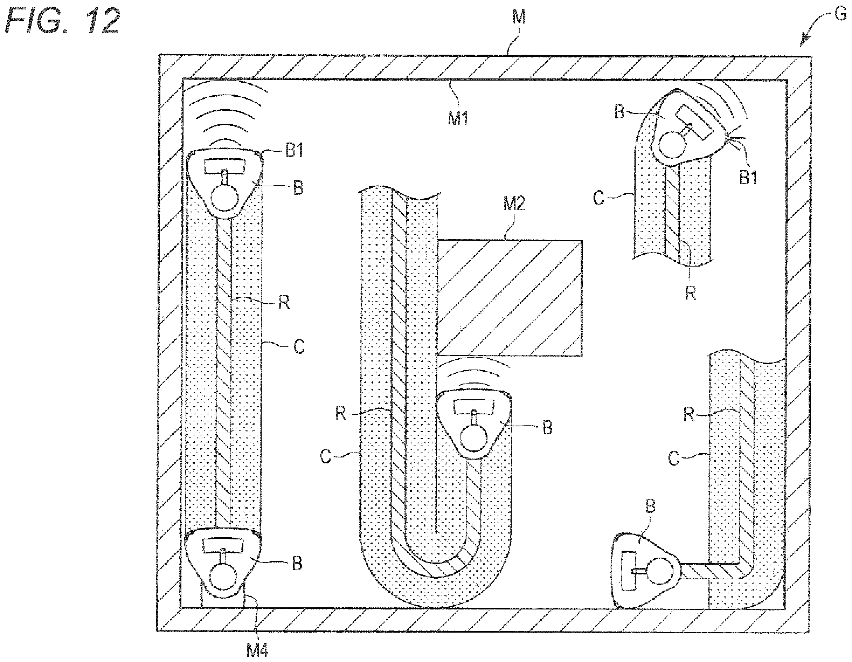

Next, the operation of the mobile terminal 6 is described with reference also to Figs. 12 to 14(A) and 14(B). Figs. 12 to 14(A) and 14(B) are diagrams illustrating display images of the information processing apparatus in the autonomous vacuum cleaner, respectively. When the mobile terminal 6 receives a map, path information, cleaning information, and cleaning area information from the vacuum cleaner body 2 via the communicator 52, the controller 53 generates a display image G on the basis of these pieces of information, and causes the touchscreen 51 to display the generated display image G. The display image G is a moving image (animation) corresponding to the operation of the vacuum cleaner body 2. A user can check the operating state of the vacuum cleaner body 2 in real time by viewing the display image G. The display image G that is displayed on the touchscreen 51 of the mobile terminal 6 is described in detail below.

As illustrated in Fig. 12, the display image G includes a body image B obtained by imaging the vacuum cleaner body 2, a map image M obtained by imaging a map of a cleaning target space, a path image R obtained by imaging path information, and a cleaning image C obtained by imaging cleaning information and cleaning area information. The body image B includes an indicator B1 displayed, blinking, corresponding to the operation display 16. The body image B is displayed in such a manner as to move in the display image G on the basis the location information acquired by the location information acquirer 432 of the vacuum cleaner body 2 to represent the travel operation of the vacuum cleaner body 2. Moreover, the indicator generator 64 controls the display of the indicator B1 to display an operation common to the operating state (for example, the blinking of the blinker 16A) of the operation display 16 (the indicator B1 blinks). The indicator B1 may be displayed, superimposed on a part of the body image B, as an image imitating the operation display 16 of the vacuum cleaner body 2, may be displayed, enlarged or reduced compared to the body image B, or may be displayed at a different position from the body image B.

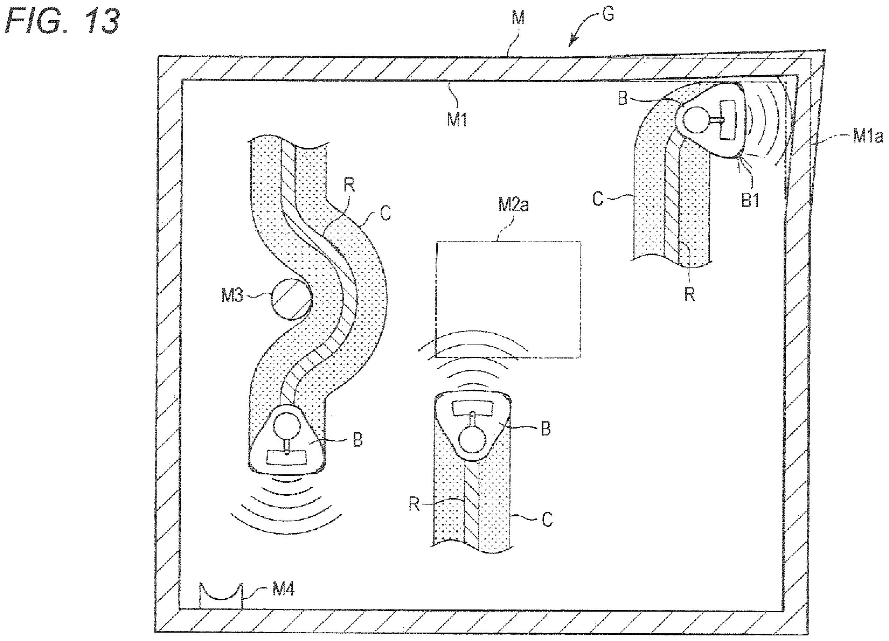

The map image M includes a fixed object image M1 representing a fixed object such as a wall in a cleaning target space, an installed object image M2 representing an installed object, a non-fixed object image M3 (refer to Fig. 13) representing a non-fixed object, and a starting point image M4 representing a starting point where a charging station is. The map display 61 controls the display of the map image M on the basis of the surrounding information acquired by the surrounding information acquirer 431 of the vacuum cleaner body 2 to display the map created or updated in real time.

The path information display 62 controls the display of the path image R on the basis of the location information acquired by the location information acquirer 432 of the vacuum cleaner body 2 to display a linear travel path corresponding to the travel operation of the vacuum cleaner body 2. The cleaning information display 63 controls the display of the cleaning image C on the basis of the cleaning information and cleaning area information created by the cleaning information creator 473 of the vacuum cleaner body 2 to display a band-shaped cleaning area corresponding to the cleaning operation of the vacuum cleaner body 2. The cleaning image C is displayed in a place that has been cleaned by the vacuum cleaner body 2 and is not displayed in a place that has not been cleaned by the vacuum cleaner body 2 although travelled, which allows the user to distinguish between execution and non-execution of cleaning according to the place. Moreover, the cleaning image C is displayed, color-coded according to the execution state of cleaning by the vacuum cleaner body 2, which allows the user to determine the execution state of cleaning according to the place.

As described above, the map image M, the path image R, and the cleaning image C, which are generated with the cleaning operation of the vacuum cleaner body 2, are newly generated and displayed whenever cleaning is performed. In other words, if a target object changes in a cleaning target space, or if the travel operation or cleaning operation of the vacuum cleaner body 2 changes, the map image M, the path image R, and the cleaning image C are displayed in a state different form the previous ones (the display image G illustrated in Fig. 12) as illustrated in Fig. 13. Specifically, if a non-fixed object that was not present in the previous cleaning mission is placed, the non-fixed object is detected and the surrounding information and the map are updated. Accordingly, the display image G including the non-fixed object image M3 illustrating the non-fixed object is displayed. Furthermore, the vacuum cleaner body 2 travels, avoiding the non-fixed object, and cleans at the same time. Accordingly, the path image R and the cleaning image C around the non-fixed object image M3 are also displayed as those different from the previous ones.

Moreover, if an installed object that was present during the previous cleaning mission disappears, the surrounding information and the map are updated without detecting the installed object. Accordingly, the display image G where an image M2a is not present in a place where the installed object was is displayed. The path image R and the cleaning image C in this place are also displayed as those different from the previous ones. Furthermore, if the location of a fixed object (wall) is detected differently compared to the previous cleaning mission, the surrounding information and the map, which are related to the fixed object, are updated. Accordingly, the fixed object image M1 is displayed at a location different from a fixed object image M1a present in the previous map. The path image R and the cleaning image C are also displayed as those different from the previous ones, corresponding to the fixed object image M1. The creation and update of the map is not limited to one based on a comparison with a map created in the previous cleaning mission, and is also executed in autonomous cleaning mode in one cleaning mission for each of a plurality of passages through the same place. Accordingly, as long as the map is updated even at such a timing, the map image M, the path image R, and the cleaning image C are newly generated on the basis of the updated map, and are displayed.

When accepting an operation input (a touch operation on the touchscreen 51) from a user, the destination setter 65 of the mobile terminal 6 sets a destination in the map, and the transmission command 66 transmits a movement command for moving toward the destination, to the vacuum cleaner body 2. Specifically, as illustrated in Figs. 14(A) and 14(B), a place M3a where in the display image G a non-fixed object was is touched by a user, the destination setter 65 sets coordinate values of this location as a destination, and displays the illuminating place M3a. The transmission command 66 transmits the coordinates of the destination as a movement command to the vacuum cleaner body 2 via the communicator 52. The controller 5 of the vacuum cleaner body 2, which has received the movement command, allows the travel controller 41 to drive the travel driver, and allows the vacuum cleaner body 2 to travel toward the coordinates of the destination and clean around the destination. Such travel to a destination and cleaning of the vacuum cleaner body 2 is also displayed in real time as the path image R and the cleaning image C on the mobile terminal 6.

According to such an embodiment, the following operations and effects can be exerted:
(1) The autonomous vacuum cleaner 1 allows the map creator 471 to create a map of a cleaning target space including the vacuum cleaner body 2 in real time on the basis of surrounding information and location information, which are acquired as the vacuum cleaner body 2 travels autonomously, and allows the map display 61 of the mobile terminal 6 to display the map image M of the created map. Accordingly, a user can grasp the state of the vacuum cleaner body 2 in the cleaning target space in real time. Therefore, the user can check, for example, a change in an environment of the cleaning target space, the operating state of the vacuum cleaner body 2, and whether or not the map of the cleaning target space has been appropriately created so that if an abnormality occurs in them, it is possible for the user to handle the abnormality. Accordingly, the cleaning efficiency can be increased.
(2) If the correction determiner 474 determines that a correction to the created map is required, the autonomous vacuum cleaner 1 allows the correction executor 475 to correct the map on the basis of newly acquired surrounding information and location information. Accordingly, the accuracy of a map to be created in real time can be increased.
(3) The autonomous vacuum cleaner 1 allows the path information creator 472 to create path information related to a travel path of the vacuum cleaner body 2, on the basis of newly acquired surrounding information and location information, and allows the path information display 62 of the mobile terminal 6 to display the created path information as the path image R, superimposing the path information on the map image M. Accordingly, the user can check the travel path of the vacuum cleaner body 2 in the cleaning target space. Furthermore, if the correction executor 475 corrects the map, the path information creator 472 corrects the path information in accordance with the corrected map. Accordingly, consistency between the corrected map and the path information can be provided.
(4) The autonomous vacuum cleaner 1 allows the cleaning information creator 473 to create cleaning information related to a cleaning result of the vacuum cleaner body 2 on the basis of the path information, and allows the cleaning information display 63 of the mobile terminal 6 to display the created cleaning information as the cleaning image C, superimposing the cleaning information on the map image M. Accordingly, the user can check the cleaning result of the vacuum cleaner body 2 in the cleaning target space. Furthermore, if the correction executor 475 corrects the map, the cleaning information creator 473 corrects the cleaning information in accordance with the corrected map. Accordingly, consistency between the corrected map and the cleaning information can be provided, and the user can grasp the cleaned place correctly.
(5) Furthermore, the cleaning information creator 473 creates cleaning area information on the basis of cleaning execution information and path information, and the cleaning information display 63 displays the cleaning area information as the cleaning image C, superimposing the cleaning area information on the map image M. Accordingly, the user can, in real time, check the execution state of cleaning by the vacuum cleaner body 2 (for example, the turning on/off of the vacuum operation, a change in suction power, and the number of repetitions of cleaning in the same place) and the cleaned area.
(6) The mobile terminal 6 includes the destination setter 65 and the transmission command 66, and transmits a destination inputted by the user to the vacuum cleaner body 2. The vacuum cleaner body 2 moves toward the destination in the cleaning target space on the basis of the received movement command. Accordingly, the vacuum cleaner body 2 can be moved to and clean any place in the cleaning target space at the request of the user. Therefore, for example, even if cleaning cannot be performed around an obstacle in the cleaning target space, the user removes the obstacle first and then moves the vacuum cleaner body 2 with a place of the obstacle as a destination. Accordingly, the place where the obstacle was can be cleaned, and a map after the obstacle was removed can be created.
(7) The mobile terminal 6 includes the indicator generator 64. The indicator generator 64 displays the indicator B1 indicating the action state of the vacuum cleaner body 2, superimposing the indicator B 1 on the body image B in the map image M. Accordingly, the user can check the operating state of the actual vacuum cleaner body 2 easily by viewing the body image B in the map image M. Moreover, the indicator B1 presents a common operating state as an image imitating the operation display 16 of the vacuum cleaner body 2. Accordingly, the user can grasp the operating state of the vacuum cleaner body 2 intuitionally compared with, for example, a case where the indicator is displayed as character information.

### [Modifications of Embodiment]

The present invention is not limited to the above embodiment. Modifications, improvements, and the like within the scope that can achieve the object of the present invention are included in the present invention.

For example, in the autonomous vacuum cleaner 1 of the above embodiment, the map controller 47 including the map creator 471 is provided in the controller 5 of the vacuum cleaner body 2. However, the map controller may be provided in the mobile terminal (information processing apparatus) 6. In other words, it may be configured in such a manner that the surrounding information acquirer 431 and the location information acquirer 432 provided in the controller 5 of the vacuum cleaner body 2 acquire surrounding information and location information and transmit the surrounding information and the location information to the information processing apparatus, and it may be configured in such a manner that the map controller of the information processing apparatus creates and updates a map, and creates path information, cleaning information, and cleaning area information.

The map controller 47 of the above embodiment includes the map creator 471, the path information creator 472, the cleaning information creator 473, the correction determiner 474, and the correction executor 475. However, the map controller 47 is simply required to include at least only the map creator, and the path information creator, the cleaning information creator, the correction determiner, and the correction executor can be omitted as appropriate. At this point in time, also in the information processing apparatus, it is simply required to include at least only the map display among the map display 61, the path information display 62, and the cleaning information display 63, and the path information display and the cleaning information display can be omitted as appropriate.

The information processing apparatus of the above embodiment is a mobile communication apparatus such as a mobile phone, a smartphone, or a tablet terminal. However, the information processing apparatus is not limited to them, and may be a desktop personal computer, a terminal apparatus installed in a house or a vehicle, or a display apparatus such as a television. Moreover, if the information processing apparatus is a terminal apparatus connected to the Internet, the functions of the map controller 47 including the map creator 471 may be realized by a server apparatus on the Internet. Moreover, the mobile terminal 6 of the above embodiment is configured in such a manner that the touchscreen 51 being a display accepts an operation input from a user. However, the configuration is not limited to this. The operation input may be executed by any input device such as a keyboard, a mouse, or a track pad.

The mobile terminal (information processing apparatus) 6 of the above embodiment includes the indicator generator 64. The indicator generator 64 displays the indicator B1 indicating the operating state of the vacuum cleaner body 2, superimposing the indicator B1 on the body image B in the map image M. However, such an indicator may not be displayed. Moreover, the mobile terminal (information processing apparatus) 6 includes the destination setter 65 and the transmission command 66, and is configured in such a manner as to transmit a destination inputted by a user to the vacuum cleaner body 2. However, the destination setter and the transmission command may be omitted.

In the above embodiment, in autonomous cleaning mode, the surrounding information acquirer 431 generates surrounding information on the basis of detection by the front sensor 31, the contact sensor 32, and the surroundings sensor 33. The location information acquirer 432 generates location information. A map is created on the basis of these pieces of information. However, it may be configured in such a manner that the surrounding information and the location information are acquired on the basis of detection by at least one of the front sensor 31, the contact sensor 32, and the surroundings sensor 33. Moreover, the timings when a map is created and updated are not limited to the autonomous cleaning mode, but may be the map generation mode, the map updating mode, and the space determination mode.

In the above embodiment, the correction determiner 474 compares the error e with the permissible value in the error determination step (step ST7), and if the error e is greater than the permissible value, the correction executor 475 corrects the map M in the map correction step (step ST8). However, not only the error e but also a travel distance that the vacuum cleaner body 2 has travelled since the start of cleaning may be added to the determination of whether or not the map M is corrected, and other operation records and the like may be included in the determination conditions.

### INDUSTRIAL APPLICABILITY

As described above, the present invention can be suitably used for an autonomous vacuum cleaner that allows a user to check the operating state of a vacuum cleaner body and a map to be created, and can increase cleaning efficiency.

### LIST OF REFERENCE NUMERALS

- 1: Autonomous vacuum cleaner
- 2: Vacuum cleaner body
- 6: Mobile terminal (information processing apparatus)
- 16: Operation display (body indicator)
- 61: Map display
- 62: Path information display
- 63: Cleaning information display
- 64: Indicator generator
- 65: Destination setter
- 66: Transmission command
- 431: Surrounding information acquirer (surrounding information acquisition means)
- 432: Location information acquirer (location information acquisition means)
- 471: Map creator
- 472: Path information creator
- 473: Cleaning information creator
- 474: Correction determiner
- 475: Correction executor
- B: Body image
- B1: Indicator
- C: Cleaning image (cleaning information, cleaning area information)
- M: Map image (map)
- R: Path Image (path information)

## Claims

1. An autonomous vacuum cleaner comprising:
a vacuum cleaner body configured to be capable of cleaning a floor surface while travelling autonomously along the floor surface; and
an information processing apparatus configured to process information transmitted from the vacuum cleaner body, wherein
the vacuum cleaner body includes:
a surrounding information acquisition means configured to acquire surrounding information related to a target object in a cleaning target space; and
a location information acquisition means configured to acquire location information of the vacuum cleaner body in the cleaning target space,
at least one of the vacuum cleaner body and the information processing apparatus includes a map creator configured to create a map of the cleaning target space on the basis of the surrounding information and the location information,
the information processing apparatus includes a map display configured to display the map, and
whenever the vacuum cleaner body acquires the surrounding information and the location information while travelling autonomously, the map creator creates the map of the cleaning target space including the vacuum cleaner body in real time, and the map display of the information processing apparatus displays the map.

2. The autonomous vacuum cleaner according to claim 1, wherein the map creator includes:
a correction determiner configured to determine whether or not to correct the map on the basis of the previously created map and newly acquired surrounding information and location information; and
a correction executor configured to, upon the correction determiner having determined to correct the map, correct the previously created map on the basis of the newly acquired surrounding information and location information.

3. The autonomous vacuum cleaner according to claim 2, wherein
at least one of the vacuum cleaner body and the information processing apparatus includes a path information creator configured to create path information related to a travel path of the vacuum cleaner body on the basis of the newly acquired surrounding information and location information,
the information processing apparatus includes a path information display configured to display the path information, superimposing the path information on the map, and
upon the correction executor having corrected the map, the path information creator corrects the path information in accordance with the corrected map.

4. The autonomous vacuum cleaner according to claim 3, wherein
at least one of the vacuum cleaner body and the information processing apparatus includes a cleaning information creator configured to create cleaning information related to a cleaning result of the vacuum cleaner body, on the basis of the path information created by the path information creator,
the information processing apparatus includes a cleaning information display configured to display the cleaning information, superimposing the cleaning information on the map, and
upon the correction executor having corrected the map, the cleaning information creator corrects the cleaning information in accordance with the corrected map.

5. The autonomous vacuum cleaner according to claim 4, wherein
the cleaning information creator creates cleaning area information related to an area that has been cleaned by the vacuum cleaner body, on the basis of execution information related to an execution state of cleaning by the vacuum cleaner body, and the path information created by the path information creator, and
the cleaning information display displays the cleaning area information, superimposing the cleaning area information on the map.

6. The autonomous vacuum cleaner according to any of claims 1 to 5, wherein
the information processing apparatus includes:
a destination setter configured to accept an operation input of a user and set a destination in the map; and
a transmission command configured to transmit a movement command for moving toward the destination, to the vacuum cleaner body, and
the vacuum cleaner body moves toward a destination in the cleaning target space corresponding to the destination in the map, on the basis of the movement command received from the information processing apparatus.

7. The autonomous vacuum cleaner according to any of claims 1 to 6, wherein the information processing apparatus includes an indicator generator configured to add an indicator indicating an operating state of the vacuum cleaner body, superimposing the indicator on an image of the vacuum cleaner body displayed on the map.

8. The autonomous vacuum cleaner according to claim 7, wherein
the vacuum cleaner body includes a body indicator indicating the operating state of the vacuum cleaner body, and
the body indicator and the indicator superimposed on the image of the vacuum cleaner body displayed on the map present a common operating state.
